# EUROPEAN PATENT SPECIFICATION

(11) **EP 2 502 316 B1**
(45) Date of publication and mention of the grant of the patent: **29.07.2015**
(21) Application number: 09756442.1
(22) Date of filing: 20.11.2009
(51) Int. Cl.: H01S 3/0959, H01S 4/00, H01S 3/139, H01S 3/00

(54) **METHOD AND LASER DEVICE FOR GENERATING PULSED HIGH POWER LASER LIGHT**
VERFAHREN UND LASERVORRICHTUNG ZUR ERZEUGUNG VON GEPULSTEM HOCHLEISTUNGSLASERLICHT
PROCÉDÉ ET DISPOSITIF LASER PERMETTANT DE GÉNÉRER DE LA LUMIÈRE LASER HAUTE PUISSANCE PULSÉE

(43) Date of publication of application: 26.09.2012
(73) Proprietor: Max-Planck-Gesellschaft zur Förderung der Wissenschaften e.V., 80539 München (DE)
(72) Inventor: KRAUSZ, Ferenc, 85748 Garching (DE); FILL, Ernst, 85748 Garching (DE); RAUSCHENBERGER, Jens, 85748 Garching (DE); PUPEZA, Ioachim, 80803 München (DE)
(74) Representative: Hertz, Oliver
(86) International application number: PCT/EP2009/008278
(87) International publication number: WO 2011/060805

(56) References cited:
- US-A- 3 826 996
- US-A- 4 011 523
- US-A- 4 917 447
- US-A- 4 945 547
- US-A- 6 038 055

## Description

### Subject of the invention

The invention relates to a method of generating pulsed laser light by coherent addition of laser light pulses in an enhancement cavity. Furthermore, the invention relates to a laser device comprising a laser source device and an enhancement cavity. Applications of the invention are available in the technical fields of generating high harmonic pulses of soft X-rays, generating hard X-rays by an interaction of laser pulses with relativistic electrons, generating of THz-radiation and laser spectroscopy (pump-probe-experiments).

### Technical background

Generating X-rays on the basis of an interaction of laser light with a target material or electrons requires extremely high photon flow densities as the efficiency of the X-ray generating process is low (about 10⁻⁶). High photon flow densities can be provided with laser pulses generated by active amplification or by coherent addition in a passive resonator (see e. g. C. E. Clayton et al. in "Nuclear Instruments and Methods in Physics Research A" vol. 355, 1995, p. 121 - 129, R. J. Jones et al. in "Phys. Rev. Lett." vol. 94, 2005, p. 193201-1 to 193201-4, or US 2006/0268949 A1).

Coherent addition of laser light pulses in a passive resonator (enhancement cavity) is described e.g. in US 6 038 055 or by Y. Vidne et al. in "Optics Letters" vol. 28, 2003, p. 2396-2398. A sequence of phase-coherent, equidistant input light pulses is coupled into a resonator device comprising two resonator mirrors or four resonator mirrors being arranged with a crossed ring-resonator geometry. The resonator device forms a light path having a cavity length, which is adjusted such that input light pulses are linearly superimposed in succession to form at least one circulating cavity light pulse. The circulating cavity light pulse is coupled out of the resonator device using an acousto-optical modulator as soon as the cavity light pulse has reached a predetermined minimum level of intensity.

The conventional generation of pulsed laser light using a passive enhancement cavity has limitations in terms of circulating power and photon flow density. If conventional resonator mirrors having a reflectivity of 99.9% corresponding to a reflectivity loss of 1000 ppm are used, an arrangement of e. g. four resonator mirrors yields a complete loss of at least 4000 ppm and a corresponding limit of the theoretically possible enhancement. If tuned dielectric resonator mirrors (as described e. g. by H. R. Bilger et al. in "Appl. Opt." vol. 33, 1994, pp. 7390 - 7396) having a reflectivity loss of only 30 ppm to 100 ppm are used, the cavity enhancement can be increased up to e. g. 1000 or more. However, there is still a limitation as to the circulating power. Optical non-linearity in a mirror coating or impurities on a mirror surface may yield an increased temperature or destructions on the mirror surface due to microscopic burning spots. Therefore, the conventional pulsed laser light generation is limited to an average power below 5 kW. As an example, I. Hartl et al. ("Optics Letters" vol. 32, 2007, p. 2870 to 2872) report on an average power of about 3 kW.

The practical generation of X-rays based on an interaction of laser pulses with relativistic electrons would require an average power of at least 10 kW or a photon flux of about 5*10²² photons per second which cannot be obtained with the conventional techniques.

US 4 011 523 discloses a laser system with an optical resonant cavity including a laser medium and resonator mirrors. A reflector arrangement for a free electron laser is disclosed in US 4 917 447.

### Objective of the invention

The objective of the invention is to provide an improved method of generating pulsed laser light using a passive enhancement cavity, which is capable of avoiding limitations of the conventional techniques. In particular, the pulsed laser light is to be generated with coherently added pulses having increased power and photon flux. Furthermore, the objective of the invention is to provide an improved laser device including a passive enhancement cavity, which is capable of avoiding disadvantages of the conventional techniques. In particular, the laser device is to be provided with a compact structure being capable of a stable operation with increased power and photon flow density in practical applications. Furthermore, the objective of the invention is to provide new applications of the method of generating pulsed laser light and the laser device.

### Summary of the invention

These objectives are solved by a method of generating pulsed laser light and a laser device comprising the features of the independent claims. Preferred embodiments and applications of the invention are defined in the dependent claims.

According to a first aspect of the invention, the above objective is solved by a method of generating pulsed laser light, wherein laser light pulses are coherently added in an enhancement cavity having a plurality of cavity mirrors each of which being irradiated by the light pulses circulating in

the enhancement cavity (cavity pulses) with an angle of incidence of more than 45° (oblique incidence).

According to a second aspect of the invention, the above objective is solved by a laser device comprising a laser source device arranged for providing laser light pulses having a predetermined pulse repetition rate (fᵣₑₚ) and an enhancement cavity comprising a plurality of cavity mirrors and having a predetermined cavity length (L), wherein the enhancement cavity is adjusted for coherently adding the laser light pulses and the cavity mirrors are arranged such that all of the cavity mirrors are irradiated with an angle of incidence of more than 45°.

According to the invention, all cavity mirrors are irradiated under the oblique incidence. The inventors have found that despite of a reflectivity loss expected due to the oblique incidence, the complete loss in the enhancement cavity can be kept low enough for obtaining an enhancement above 1000, in particular above 2000. As the essential advantage of the oblique incidence, the illuminated area on cavity mirror surfaces is increased by a factor of 1/cosα, where α is the angle of incidence, so that an unintended overheating can be avoided even with increased circulating power and/or repetition rate in the enhancement cavity.

According to a preferred embodiment of the invention, all the cavity mirrors are irradiated with an angle of incidence of at least 60°, in particular at least 70°, e. g. up to 75°. Advantageously, the angle of incidence of 60° or 70° allows increasing the average peak power within the enhancement cavity by a factor of 2 or 3, resp..

According to a particularly preferred embodiment of the invention, the laser device has a polarisation device which is arranged for providing the cavity pulses circulating in the enhancement cavity with s-polarization relative to the cavity mirrors. Preferably, the polarisation device, like e. g. a λ/2 plate, is arranged on an incoupling side of an input coupling mirror of the enhancement cavity and providing the cavity pulses circulating in the enhancement cavity with s-polarization. The inventors have found that circulating and coherently adding the cavity pulses with s-polarization and under oblique incidence results in a reduced penetration depth of the light field in the cavity mirrors. This further reduces the risk of overheating the cavity mirrors.

According to a further advantage of the invention, the number of cavity mirrors can be freely selected in dependency on practical application conditions. Preferably, the enhancement cavity comprises at least five cavity mirrors being arranged as a non-crossed ring resonator. Typically, the cavity mirrors comprise plane mirrors.

If a focal point is to be created along the light path in the enhancement cavity, e. g. for an interaction of the cavity pulse(s) with an optically non-linear medium or electrons, two neighbouring mirrors of the cavity mirrors comprise curved focusing mirrors being configured for focusing the cavity pulses there between. Preferably, the curved focusing mirrors comprise off-axis parabolas. The remaining cavity mirrors comprise plane mirrors.

As a preferred example, the enhancement cavity comprises eight cavity mirrors including two curved focusing mirrors. The inventors have found that with eight cavity mirrors various design options are available, e. g. with 60° or 70° oblique incidence, while reflectivity loss in the enhancement cavity can minimized.

The invention has a further essential advantage in terms of increasing the average circulating power in the enhancement cavity. According to a particularly preferred embodiment of the invention, the laser light pulses can be coherently added to a plurality of N cavity pulses (N ≥ 2) circulating in the enhancement cavity. To this end, at least one of the pulse repetition rate (fᵣₑₚ) of the laser source device and the cavity length (L) of the enhancement cavity are adjusted such that L = N * (c/fᵣₑₚ), c being the speed of light in the enhancement cavity. The N cavity pulses provide the pulsed laser light to be generated, e. g. for X-ray generation. Preferably, the laser light pulses are coherently added to at least eight cavity pulses circulating in the enhancement cavity.

While loading of the enhancement cavity with 2 or more cavity pulses is known as such from US 6 038 055, the inventive combination with irradiating the cavity mirrors under the oblique incidence yields an essential advantage in terms of the repetition rate of the cavity pulses. Due to the reduced risk of overheating the cavity mirrors, the repetition rate of the cavity pulses can be at least 100 MHz, preferably at least 325 MHz, in particular at least 500 MHz, or even 1 GHz or more, resulting in an increased average power circulating in the enhancement cavity.

Advantageously, an average power of the pulsed laser light created by the inventive coherent pulse addition can be adjusted by controlling the number N of cavity pulses circulating in the enhancement cavity. Accordingly, the average power can be selected in dependency on requirements of the particular application, e. g. for generating soft or hard X-rays, or for laser spectroscopy (pump-probe-experiments). To this end, a power control device can be provided being arranged for controlling the number N of cavity pulses circulating in the enhancement cavity.

Preferably, the pulse repetition rate (fᵣₑₚ) is set by at least one of actively adjusting the repetition rate of the laser source device and subjecting primary laser light pulses provided with the laser source device to a passive repetition rate multiplication using optical delay lines. Accordingly, the inventive laser device preferably is provided with at least one of a first repetition rate control being adapted for actively adjusting a repetition rate of the laser source device and a repetition rate multiplier, which is adapted for subjecting laser light pulses (primary laser light pulses) initially provided with the laser source device to the passive repetition rate multiplication. Optionally, the repetition rate multiplier can be provided with a second repetition rate control.

According to the invention, the method of generating pulsed laser light and the laser device are used for generating high harmonic pulses of soft X-rays, generating hard X-rays by an interaction of laser pulses with relativistic electrons, generating of THz-radiation and laser spectroscopy (pump-probe-experiments). For the X-ray generation, the inventive method preferably comprises focusing the cavity pulses at the focal point in the enhancement cavity, and subjecting the focused cavity pulses to an interaction with a target medium or electrons.

### Brief description of the drawings

Further features and advantages of the invention are described in the following with reference to the attached drawings, which show in:
- Figure 1:: a schematic illustration of the method of generating pulsed laser light and the laser device according to a first embodiment of the invention;
- Figure 2:: a schematic illustration of an enhancement cavity used according to a second embodiment of the invention; and
- Figures 3A and 3B:: a schematic illustration of a passive repetition rate adjustment using optical delay lines.

### Preferred embodiments of the invention

Embodiments of the invention are described in the following with exemplary reference to enhancement cavities having eight cavity mirrors. It is emphasized that the invention can be implemented in an analogue manner with a lower number, e. g. five to seven, or a larger number of cavity mirrors, e. g. nine or ten or even more. The cavity geometry and the angle of incidence at the cavity mirrors can be selected by experiment or by numerical design of the optical set-up based on available software solutions.

Preferred features of the invention are described for illustrating in particular the concepts of oblique incidence, irradiation with s-polarization, loading the enhancement cavity with at least two cavity pulses and passive repetition rate multiplication. Further features of the method of generating pulsed laser light and of the laser device, in particular with regard to the design and adjustment of an input coupling mirror, the synchronisation of the laser source device and the enhancement cavity, and the provision of the enhancement cavity in an environment of reduced pressure, are not described as far as they are known from conventional techniques, e. g. from US 6 038 055 or US 2006/0268949 A1.

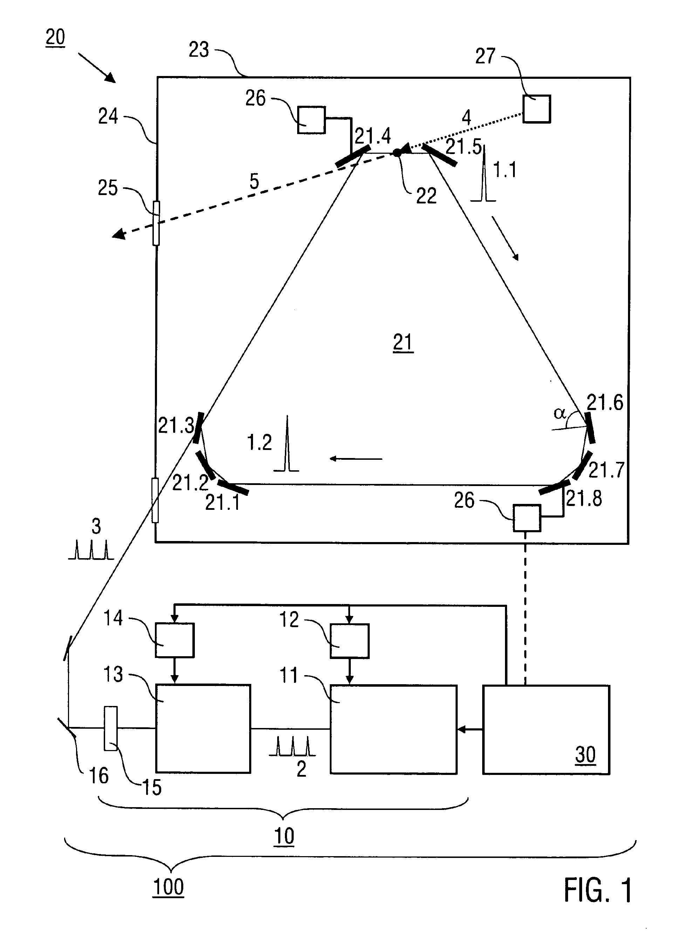

Figure 1 schematically illustrates a first embodiment of the inventive laser device 100, which comprises a laser source device 10 and an enhancement cavity device 20. As an optional feature, a power control device 30 can be provided. Additionally, the laser device 100 includes monitoring and control units (not shown) as it is known from conventional applications of enhancement cavities.

The laser source device 10 comprises a laser unit 11, which is arranged for generating primary laser pulses 2 to be coupled into the enhancement cavity device 20. The laser unit 11 comprises any conventional pulse laser, like e.g. a titansapphire laser, a Yb:KYW laser or a combination of a pulse laser with a chirped pulse amplification (CPA) system. As an example, the laser unit 11 is operated such that the primary laser pulses 2 are generated with a repetition rate of 80 MHz, a pulse duration of 200 fs, a power of 50 W and a central wavelength of about 1000 nm. The laser unit 11 is provided with a first repetition rate control 12, which is arranged for adjusting the repetition rate of the laser unit 11. Depending on the structure of the laser unit 11, the first repetition rate control 12 is adapted e.g. for controlling a resonator length of the laser unit 11 as it is known from conventional pulse lasers.

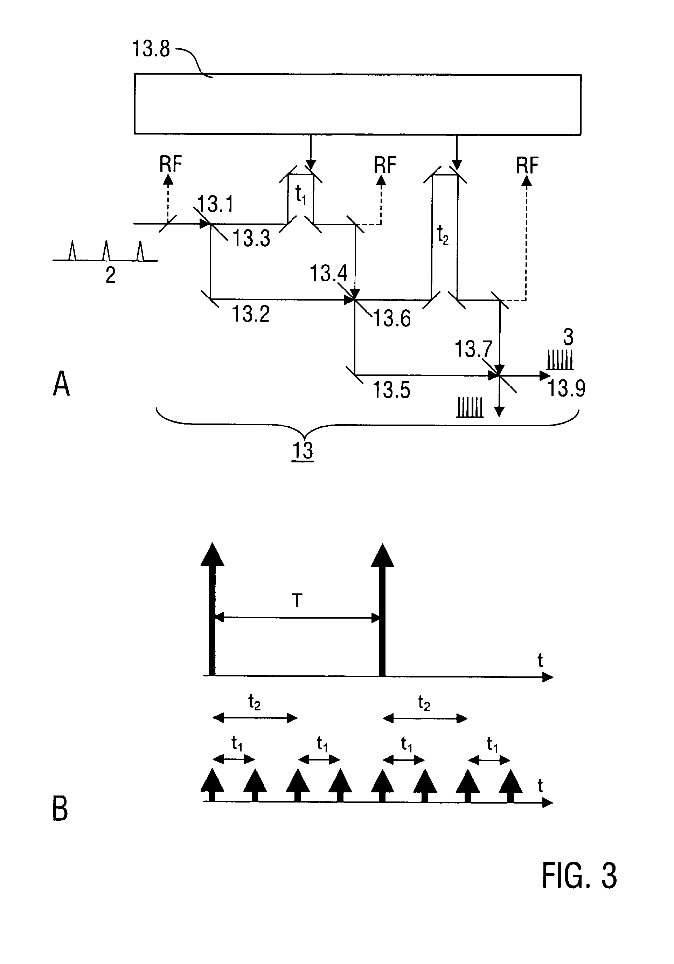

Furthermore, the laser source device 10 comprises a repetition rate multiplier 13, which is provided with a second repetition rate control 14. The repetition rate multiplier 13 is configured for creating laser pulses 3 having an increased repetition rate compared with the repetition rate of the primary laser pulses 2. The repetition rate is increased by splitting the primary laser pulses into multiple pulse sequences, propagating the pulse sequences along optical delay paths having different optical path lengths and superimposing the pulse sequences being time-shifted relative to each other. An example of a repetition rate multiplier 13 and the operation thereof is described below with reference to Figure 3. The second repetition rate control 14 may be provided for adjusting the repetition rate multiplier 13 such that a selected repetition rate is created. The components 13, 14 represent optional features of the laser device 100, which can be omitted if a repetition rate multiplication is not required.

Finally, the laser source device 10 comprises a polarisation device 15, like e.g. a λ/2 plate. The polarisation device 15 is adjusted such that the laser pulses 3 created by the laser source device 10 have s-polarization relative to the cavity mirrors of the enhancement cavity 20. According to this preferred feature of the invention, the laser pulses 2 are polarised such that the electrical vector component of the light is directed perpendicular relative to the plane of incidence at the cavity mirrors of the enhancement cavity 21. After passing the polarisation device 15, the laser pulses 3 are directed to the enhancement cavity device 20, e.g. via deflection mirrors 16.

The enhancement cavity device 20 comprises an enhancement cavity 21 arranged in a pressure tight container 23 being connected with a vacuum pump and providing an environment of reduced pressure. During operation of the laser device 100, a pressure of about 10⁻¹ Pa (10⁻³ mbar) is provided in the container 23. The enhancement cavity 21 includes an arrangement of eight cavity mirrors 21.1 to 21.8, which are positioned in the container 23.

The container 23 is provided with first and second windows 24, 25. The first window 24 is made of a material being transparent in the wavelength range of the laser pulses 3, in particular in the wavelength range from UV via visible to IR wavelengths, e.g. glass or plastic material. The second window 25 is transparent in the wavelength range of the X-rays generated at a focal point 22 of the enhancement cavity 21. The second window 25 is made of e.g. Beryllium. In particular with the generation of soft X-rays, the second window can be replaced by a connection channel opening to a further vacuum device where the soft X-rays are used.

The cavity mirrors 21.1 to 21.8 are arranged such that a light path is spanned in a plane having a cavity length L being equal to even multiples of c/fᵣₑₚ (c: speed of light, fᵣₑₚ: repetition rate of the laser pulses). The cavity mirrors comprise six plane cavity mirrors 21.1, 21.2, 21.3, 21.6, 21.7 and 21.8 and two curved focusing mirrors 21.4 and 21.5. The plane mirrors comprise dielectric mirrors, while the curved focusing mirrors comprise mirrors with parable shape. Any of the cavity mirrors can be used as an input coupling mirror through which the laser pulses 3 are coupled into the enhancement cavity 21. Preferably, one of the plane focusing mirrors 21.3, 21.6 is used as the input coupling mirror.

The enhancement cavity 21 has a typical diameter dimension of the ring geometry of about 75 cm. The diameter of the mirrors is about 1 cm. The beam diameter within the enhancement cavity 21 is below 1 mm. The plane mirrors are arranged such that the light path forms an angle α of incidence with the plane surfaces of the mirrors of 70° (see in particular at 21.6). The curved focusing mirrors 21.4, 21.5 are arranged with an off-axis-geometry and an angle of incidence of 60° (manufacturer Zeiss AG, Germany). With a beam radius along the light path in the enhancement cavity of 0,4 mm, the effective area illuminated on the plane mirrors is about π (0,4 mm)² /cos 70° = 1,5 mm². Despite of the reduced angle of incidence at the curved focusing mirrors, the effective area illuminated on the curved focusing mirrors is even larger (1,8 mm²) as the beam diameter is slightly increased at the curved focusing mirrors.

At least two of the cavity mirrors are provided with an adjustment stage 26, like e.g. a piezo-electric drive being capable of tilting the respective mirrors in all three spatial directions. For facilitating the adjustment, one of the curved focusing mirrors 21.4, 21.5 is provided with one of the adjustment stages 26.

The power control device 30 is an electronic circuitry being configured for controlling the laser device 100 such that a predetermined average power (photon flow density of all cavity pulses averaged in time) circulating in the enhancement cavity 21 is set. To this end, the power control device 30 is connected with the laser unit 11 and the controls 12, 14 as well as optionally with at least one of the adjustment stages 26.

The inventive method of generating pulsed laser light using the laser device 100 of Figure 1 comprises the following steps. Laser light pulses 3 (or 2) are generated with a predetermined pulse repetition rate using the laser unit 11 and optionally the repetition rate multiplier 13. The polarisation of the laser pulses 3 is adjusted with the polarisation device 15. The laser pulses 3 are coupled into the enhancement cavity 21 through the input coupling mirror 21.4. The operation of the laser source device 10 is adjusted such that the laser pulses coupled into the enhancement cavity are coherently added to circulating pulses 1.1, 1.2. The number of circulating cavity pulses 1.1, 1.2 is adjusted by selecting the cavity length and the repetition rate relative to each other. The circulating cavity pulses 1.1, 1.2 irradiate the mirror surfaces with angles of incidence of 60° or 70°. As a result, the average power of the circulating cavity pulses 1.1, 1.2 can be increased up to the range above 100 kW.

For generating hard X-rays, an electron beam 4 of relativistic electrons is directed from an electron source 27 to the focal point 22 with a direction opposite to the cavity pulse propagation direction within the enhancement cavity. As a precise opposite direction (180°) cannot be obtained for geometrical reasons, the electron beam 4 and the light path in the enhancement cavity form an angle of about 10°. According to the direction of the electron beam, the X-rays 5 are emitted and coupled out of the container 23 through the second window 25.

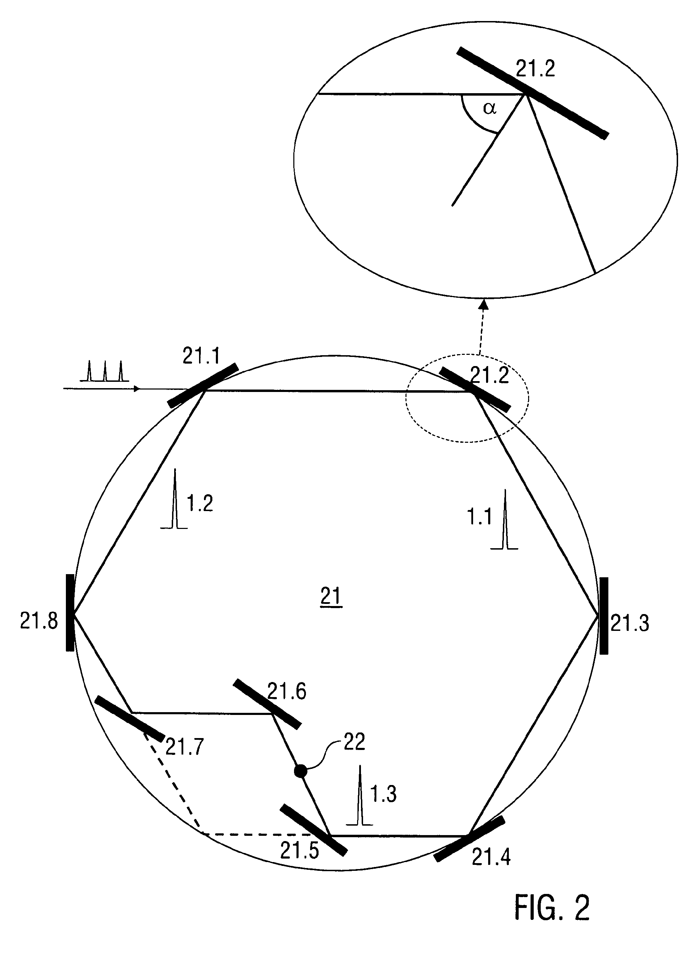

Figure 2 illustrates an alternative embodiment of an enhancement cavity 21 wherein eight cavity mirrors 21.1 to 21.8 are arranged according to a hexagonal configuration. The cavity mirrors comprise plane cavity mirrors 21.1 to 21.4 and 21.7, 21.8 as well as curved focusing mirrors 21.5, 21.6 defining a focal point 22 there between. Laser pulses 3 generated with a laser source device as shown in Figure 1 are coupled into the enhancement cavity 21 through the plane cavity mirror 21.1. Coherent addition of light pulses in the enhancement cavity 21 yields cavity pulses 1.1, 1.2 and 1.3 irradiating the mirrors with an angle α of incidence of 60°. The enlarged image illustrates the angle α of incidence. The plane of incidence is spanned by the light path (in the drawing plane). The circulating light is s-polarized, i. e. the electrical vector component of the light is directed perpendicular to the drawing plane. The curved focusing mirrors 21.5, 21.6 are 120° off-axis parabolae (manufacturer Zeiss AG, Germany). With the geometry of Figure 2, a damage threshold and accordingly the maximum power of the single cavity pulses can be increased by a factor of more than 2.

A preferred embodiment of the repetition rate multiplier 13 (see Figure 1) is schematically illustrated in Figure 3A. The primary laser pulses 2 with a time period T generated by the laser unit 11 (see Figure 1) are split at a first beam splitter 13.1 into a first beam path 13.2 and a second beam path 13.3 including an optical delay path t₁. The optical delay path t₁ is adjusted such that the pulses are delayed with T/2. The superposition of the split light pulses at a second beam splitter 13.4 results in a pulse sequence having a doubled repetition rate. At the second beam splitter 13.4 a further splitting is provided such that the pulses propagate along a third beam path 13.5 and a fourth beam path 13.6 including a second optical delay path t₂. The optical delay path t₂ is adjusted such that the pulses are delayed with T/2. As a result, the laser pulses 3 at a third beam splitter 13.7 have a repetition rate increased by a factor 4 compared with the primary laser pulses. The laser pulses in the time domain are illustrated in Figure 3B. While the primary laser pulses 2 at the input have the period T, the laser pulses output at the third beam splitter 13.7 have the period of T/4. This principle generally can be extended to a shortening of the repetition period by T/2^{N} (N being the number of optical delay lines).

While the passive repetition rate multiplier 13 of Figure 3A is known as such from prior art (see e. g. C. E. Clayton et al. in "Nuclear Instruments and Methods in Physics Research A" vol. 355, 1995, p. 121 - 129), the inventive embodiment of this device is provided with a schematically illustrated adjustment system 13.8. As the precise adjustment of the repetition rate even at the output 13.9 of the multiplier 13 is essential for the coherent addition of the laser pulses in the enhancement cavity, the adjustment system 13.8 is provided for locking the pulse sequences at each delay branch relative to each other. For the mutual locking, the 4th (generally 2^{N}th) harmonic of the input repetition rate (RF) can be used as a reference. For each delay branch an RF signal is generated (schematically illustrated with the dashed arrows RF), which is compared to the reference for the generation of an error signal. Based on this error signal, the optical delay path lengths t₁, t₂ can be adjusted using a PLL loop.

The features of the invention disclosed in the above description, the drawings and the claims can be of significance both individually as well as in combination for the realization of the invention in its various embodiments.

## Claims

1. Method of generating pulsed laser light (1), comprising the steps of:
- providing laser light pulses (2, 3) having a predetermined pulse repetition rate (fᵣₑₚ) with a laser source device (10),
- coupling the laser light pulses into an enhancement cavity (21) with a plurality of cavity mirrors (21.1, 21.2, ...) and a predetermined cavity length (L), and
- coherent addition of the laser light pulses (3) in the enhancement cavity so that at least one cavity pulse (1.1, 1.2, ...) is formed by linearly superimposing the laser light pulses (3),
**characterized in that**
- the at least one cavity pulse (1.1, 1.2, ...) circulating in the enhancement cavity (21) irradiates all of the cavity mirrors (21.1, 21.2, ...) under oblique incidence with an angle (α) of incidence of more than 45°.

2. Method according to claim 1, wherein
- the at least one cavity pulse (1.1, 1.2, ...) circulating in the enhancement cavity (21) irradiates all of the cavity mirrors (21.1, 21.2, ...) under oblique incidence with an angle (α) of incidence of at least 60°.

3. Method according to one of the foregoing claims, wherein
- the at least one cavity pulse (1.1, 1.2, ...) circulating in the enhancement cavity (21) has s-polarization.

4. Method according to claim 1, comprising the step of
- adjusting the s-polarization of the at least one cavity pulse (1.1, 1.2, ...) using a λ/2 plate arranged on an incoupling side of the enhancement cavity (21).

5. Method according to one of the foregoing claims, wherein
- the laser light pulses (3) are coherently added to a plurality of N cavity pulses (1.1, 1.2, ...), with N ≥ 2, circulating in the enhancement cavity (21), wherein
- the laser light pulses (3) are coherently added by setting at least one of the pulse repetition rate (fᵣₑₚ) and the cavity length (L) such that L = N * (c/fᵣₑₚ), c being the speed of light in the enhancement cavity (21).

6. Method according to claim 5, wherein the pulse repetition rate (fᵣₑₚ) is set by at least one of
- actively adjusting a repetition rate of the laser source device (10), and
- subjecting primary laser light pulses (2) provided by the laser source device (10) to a passive repetition rate multiplication (13).

7. Method according to claims 5 or 6, wherein
- the laser light pulses (3) are coherently added to at least eight cavity pulses (1.1, 1.2, ...) circulating in the enhancement cavity (21).

8. Method according to one of the foregoing claims, comprising the step of
- arranging at least five cavity mirrors (21.1, 21.2, ...) as a non-cross ring resonator providing the enhancement cavity (21), and
- adjusting an average power of the pulsed laser light (1) by controlling the number N of cavity pulses (1.1, 1.2, ...) circulating in the enhancement cavity (21), and/or
- focusing the at least one cavity pulse (1.1, 1.2, ...) at a focal point (22) in the enhancement cavity (21), and subjecting the at least one focused cavity pulse (1.1, 1.2, ...) to an interaction with a target medium or electrons.

9. Laser device (100), being configured for generating pulsed laser light (1), comprising:
- a laser source device (10) arranged for providing laser light pulses (2, 3) having a predetermined pulse repetition rate (fᵣₑₚ) , and
- an enhancement cavity device (20) comprising an enhancement cavity (21) with a plurality of cavity mirrors (21.1, 21.2, ...) and a predetermined cavity length (L), the enhancement cavity (21) being arranged for coherently adding the laser light pulses (3) to at least one cavity pulse (1.1, 1.2, ...) by linearly superimposing the laser light pulses, (3) **characterized in that**
- the cavity mirrors (21.1, 21.2, ...) of the enhancement cavity are arranged such that the at least one cavity pulse (1.1, 1.2, ...) circulating in the enhancement cavity (21) irradiates all of the cavity mirrors (21.1, 21.2, ...) under oblique incidence with an angle (α) of incidence of more than 45°.

10. Laser device according to claim 9, wherein
- the cavity mirrors (21.1, 21.2, ...) of the enhancement cavity are arranged such that the at least one cavity pulse (1.1, 1.2, ...) circulating in the enhancement cavity (21) irradiates all of the cavity mirrors (21.1, 21.2, ...) under oblique incidence with an angle (α) of incidence of at least 60°.

11. Laser device according to claim 9 or 10, comprising
- a polarisation device (14) being arranged on an incoupling side of the enhancement cavity (21) and providing the at least one cavity pulse (1.1, 1.2, ...) circulating in the enhancement cavity (21) with s-polarization.

12. Laser device according to claim 11, wherein
- the polarisation device (14) comprises a λ/2 plate.

13. Laser device according to one of the claims 9 to 12, wherein
- the enhancement cavity (21) comprises at least five cavity mirrors (21.1, 21.2, ...) being arranged as a non-cross ring resonator.

14. Laser device according to one of the claims 9 to 13, wherein
- the laser source device (10) and the enhancement cavity (21) are adjusted such that the cavity length is L = N * (c/fᵣₑₚ), c being the speed of light, wherein the enhancement cavity (21) is capable of coherently adding the laser light pulses (3) to a plurality of N cavity pulses (1.1, 1.2, ...) , with N ≥ 2, circulating in the enhancement cavity (21).

15. Laser device according to claim 14, wherein the laser source device (10) includes at least one of
- a first repetition rate control (12) being adapted for actively adjusting a repetition rate of the laser source device (10), and
- a repetition rate multiplier (13) being adapted to subject the primary laser light pulses (2) provided by the laser source device (10) to a passive repetition rate multiplication.

## Patentansprüche

1. Verfahren zur Erzeugung von gepulstem Laserlicht (1) umfassend die Schritte:
- Bereitstellung von Laserlichtpulsen (2, 3), die eine vorbestimmte Pulsrepetitionsrate (fᵣₑₚ) aufweisen, mit einer Laserquelleneinrichtung (10),
- Einkopplung der Laserlichtpulse in einen Überhöhungsresonator (21) mit einer Vielzahl von Resonatorspiegeln (21.1, 21.2, ...) und einer vorbestimmten Resonatorlänge (L) und
- kohärente Addition der Laserlichtpulse (3), in dem Überhöhungsresonator, so dass mindestens ein Resonatorpuls (1.1, 1.2, ...) durch lineare Überlagerung der Laserlichtpulse (3) gebildet wird,
**dadurch gekennzeichnet, dass**
- der mindestens eine Resonatorpuls (1.1, 1.2, ...), der in dem Überhöhungsresonator (21) zirkuliert, sämtliche der Resonatorspiegel (21.1, 21.2, ...) unter schrägem Einfall mit einem Einfallswinkel (α) von mehr als 45° bestrahlt.

2. Verfahren gemäß Anspruch 1, wobei
- der mindestens eine Resonatorpuls (1.1, 1.2, ...), der in dem Überhöhungsresonator (21) zirkuliert, sämtliche der Resonatorspiegel (21.1, 21.2, ...) unter schrägem Einfall mit einem Einfallswinkel (α) von mindestens 60° bestrahlt.

3. Verfahren gemäß einem der vorhergehenden Ansprüche, wobei
- der mindestens eine Resonatorpuls (1.1, 1.2, ...), der in dem Überhöhungsresonator (21) zirkuliert, s-Polarisation aufweist.

4. Verfahren gemäß Anspruch 1, umfassend den Schritt
- Justierung der s-Polarisation des mindestens einen Resonatorpulses (1.1, 1.2, ...), wobei eine λ/2-Platte verwendet wird, die auf einer Einkopplungsseite des Überhöhungsresonators (21) angeordnet ist.

5. Verfahren gemäß einem der vorhergehenden Ansprüche, wobei
- die Laserlichtpulse (3) kohärent zu einer Vielzahl von N Resonatorpulsen (1.1, 1.2, ...) mit N ≥ 2 kohärent addiert werden, die in dem Überhöhungsresonator (21) zirkulieren, wobei
- die Laserlichtpulse (3) kohärent addiert werden, indem mindestens eines von der Pulsrepetitionsrate (fᵣₑₚ) und der Resonatorlänge (L) derart eingestellt werden, dass L = N * (c/fᵣₑₚ) ist, wobei c die Lichtgeschwindigkeit in dem Überhöhungsresonator (21) ist.

6. Verfahren gemäß Anspruch 5, wobei die Pulsrepetitionsrate (fᵣₑₚ) durch mindestens eines eingestellt wird von
- einer aktiven Justierung einer Repetitionsrate der Laserquelleneinrichtung (10), und
- einer Unterziehung von primären Laserlichtpulsen (2), die durch die Laserquelleneinrichtung (10) bereitgestellt werden, einer passiven Repetitionsratenmultiplikation (13).

7. Verfahren gemäß Anspruch 5 oder 6, wobei
- die Laserlichtpulse (3) zu mindestens acht Resonatorpulsen (1.1, 1.2, ...) kohärent addiert werden, die in dem Überhöhungsresonator (21) zirkulieren.

8. Verfahren gemäß einem der vorhergehenden Ansprüche, umfassend den Schritt
- Anordnung von mindestens fünf Resonatorspiegeln (21.1, 21.2, ...) als einen kreuzungsfreien Ringresonator, der den Überhöhungsresonator (21) bereitstellt, und
- Justierung einer mittleren Leistung des gepulsten Laserlichts (1) durch eine Steuerung der Anzahl N von Resonatorpulsen (1.1, 1.2, ...), die in dem Überhöhungsresonator (21) zirkulieren, und/oder
- Fokussierung des mindestens einen Resonatorpulses (1.1, 1.2, ...) auf einen Fokalpunkt (22) in dem Überhöhungsresonator (21) und Unterziehung des mindestens einen fokussierten Resonatorpulses (1.1, 1.2, ...) einer Wechselwirkung mit einem Targetmedium oder Elektronen.

9. Lasereinrichtung (100), die zur Erzeugung von gepulstem Laserlicht (1) konfiguriert ist, umfassend:
- eine Laserquelleneinrichtung (10), die zur Bereitstellung von Laserlichtpulsen (2, 3) angeordnet ist, die eine vorbestimmte Pulsrepetitionsrate (fᵣₑₚ) aufweisen, und
- eine Überhöhungsresonatoreinrichtung (20), umfassend einen Überhöhungsresonator (21) mit einer Vielzahl von Resonatorspiegeln (21.1, 21.2, ...) und einer vorbestimmten Resonatorlänge (L), wobei der Überhöhungsresonator (21) zur kohärenten Addition der Laserlichtpulse (3) zu mindestens einem Resonatorpuls (1.1, 1.2, ...) durch lineare Überlagerung der Laserlichtpulse (3) angeordnet ist,
**dadurch gekennzeichnet, dass**
- die Resonatorspiegel (21.1, 21.2, ...) des Überhöhungsresonators derart angeordnet sind, dass der mindestens eine Resonatorpuls (1.1, 1.2, ...), der in dem Überhöhungsresonator (21) zirkuliert, sämtliche der Resonatorspiegel (21.1, 21.2, ...) unter schrägem Einfall mit einem Einfallswinkel (α) von mehr als 45° bestrahlt.

10. Lasereinrichtung gemäß Anspruch 9, wobei
- die Resonatorspiegel (21.1, 21.2, ...) des Überhöhungsresonators derart angeordnet sind, dass der mindestens eine Resonatorpuls (1.1, 1.2, ...), der in dem Überhöhungsresonator (21) zirkuliert, sämtliche der Resonatorspiegel (21.1, 21.2, ...) unter schrägem Einfall mit einem Einfallswinkel (α) von mindestens 60° bestrahlt.

11. Lasereinrichtung gemäß Anspruch 9 oder 10, umfassend
- eine Polarisationseinrichtung (14), die an einer Einkopplungsseite des Überhöhungsresonators (21) angeordnet ist und den mindestens einen Resonatorpuls (1.1, 1.2, ...), der in dem Überhöhungsresonator (21) zirkuliert, mit s-Polarisation bereitstellt.

12. Lasereinrichtung gemäß Anspruch 11, wobei
- die Polarisationseinrichtung (14) eine λ/2-Platte umfasst.

13. Lasereinrichtung gemäß einem der Ansprüche 9 bis 12, wobei
- der Überhöhungsresonator (21) mindestens fünf Resonatorspiegel (21.1, 21.2, ...) umfasst, die als ein kreuzungsfreier Ringresonator angeordnet sind.

14. Lasereinrichtung gemäß einem der Ansprüche 9 bis 13, wobei
- die Laserquelleneinrichtung (10) und der Überhöhungsresonator (21) derart justiert sind, dass die Resonatorlänge L = N * (c/fᵣₑₚ) ist, wobei c die Geschwindigkeit des Lichtes ist, wobei der Überhöhungsresonator (21) geeignet ist, die Laserlichtpulse (3) kohärent zu einer Vielzahl von N Resonatorpulsen (1.1, 1.2, ...) mit N ≥ 2, die in dem Überhöhungsresonator (21) zirkulieren, zu addieren.

15. Lasereinrichtung gemäß Anspruch 14, wobei die Laserquelleneinrichtung mindestens eines enthält von
- einer ersten Repetitionsratensteuerung (12), die für eine aktive Justierung einer Repetitionsrate der Laserquelleneinrichtung (10) angepasst ist, und
- einen Repetitionsratenmultiplizierer (13), der angepasst ist, die primären Laserlichtpulse (2), welche durch die Laserquelleneinrichtung (10) bereitgestellt werden, einer passiven Repetitionsratenmultiplikation zu unterziehen.

## Revendications

1. Procédé de génération de lumière laser à impulsions (1), comprenant les étapes de :
- fourniture d'impulsions de lumière laser (2, 3) possédant une fréquence de répétition d'impulsion (fᵣₑₚ) prédéterminée avec un dispositif à source laser (10),
- couplage des impulsions de lumière laser dans une cavité d'amplification (21) avec une pluralité de miroirs de cavité (21. 1, 21.2, ...) et une longueur de cavité (L) prédéterminée, et
- ajout cohérent des impulsions de lumière laser (3) dans la cavité d'amplification pour qu'au moins une impulsion de cavité (1.1, 1.2,...) soit formée en superposant linéairement les impulsions de lumière laser (3),
**caractérisé en ce que**
au moins une impulsion de cavité (1.1, 1.2, ...) circulant dans la cavité d'amplification (21) irradie la totalité des miroirs de cavité (21.1, 21.2, ...) sous incidence oblique avec un angle (α) d'incidence de plus de 45°.

2. Procédé selon la revendication 1, dans lequel
- au moins une impulsion de cavité (1.1, 1.2, ...) circulant dans la cavité d'amplification (21) irradie la totalité des miroirs de cavité (21.1, 21.2, ...) sous incidence oblique avec un angle (α) d'incidence d'au moins 60°.

3. Procédé selon l'une des revendications précédentes, dans lequel
- au moins une impulsion de cavité (1.1, 1.2, ...) circulant dans la cavité d'amplification (21) présente une polarisation s.

4. Procédé selon la revendication 1, comprenant l'étape de
- réglage de la polarisation s d'au moins une impulsion de cavité (1.1, 1.2, ...) en utilisant une lame à retard λ/2 agencée sur un côté dédié au couplage d'entrée de la cavité d'amplification (21).

5. Procédé selon l'une des revendications précédentes, dans lequel
- les impulsions de lumière laser (3) sont ajoutées de façon cohérente à une pluralité de N impulsions de cavité (1.1, 1.2, ...), avec N ≥ 2, circulant dans la cavité d'amplification (21), dans lequel
- les impulsions de lumière laser (3) sont ajoutées de façon cohérente en établissant au moins une fréquence de répétition d'impulsion (fᵣₑₚ) et la longueur de cavité (L) de sorte que L = N * (c/fᵣₑₚ), c étant la vitesse de la lumière dans la cavité d'amplification (21).

6. Procédé selon la revendication 5, dans lequel la fréquence de répétition d'impulsion (fᵣₑₚ) est établie par au moins un de
- le réglage dynamique d'une fréquence de répétition du dispositif à source laser (10), et
- la soumission d'impulsions de lumière laser primaires (2) fournies par le dispositif à source laser (10) à une multiplication passive de fréquence de répétition (13).

7. Procédé selon les revendications 5 ou 6, dans lequel
- les impulsions de lumière laser (3) sont ajoutées de façon cohérente à au moins huit impulsions de cavité (1.1, 1.2, ...) circulant dans la cavité d'amplification (21).

8. Procédé selon l'une des revendications précédentes, comprenant les étapes
- d'agencement d'au moins cinq miroirs de cavité (21.1, 21.2, ...) en tant que résonateur annulaire non croisé fournissant la cavité d'amplification (21), et
- réglage d'une puissance moyenne de la lumière laser à impulsions (1) en contrôlant le nombre N d'impulsions de cavité (1.1, 1.2, ...) circulant dans la cavité d'amplification (21), et/ou
- de focalisation d'au moins une impulsion de cavité (1.1, 1.2, ...) à un foyer (22) dans la cavité d'amplification (21), et de soumission d'au moins une impulsion de cavité focalisée (1.1, 1.2, ...) à une interaction avec un milieu cible ou des électrons.

9. Dispositif laser (100), configuré pour générer de la lumière laser à impulsions (1), comprenant :
- un dispositif à source laser (10) agencé pour fournir des impulsions de lumière laser (2, 3) possédant une fréquence de répétition d'impulsion (fᵣₑₚ) prédéterminée, et
- un dispositif à cavité d'amplification (20) comprenant une cavité d'amplification (21) avec une pluralité de miroirs de cavité (21.1, 21.2, ...) et une longueur de cavité (L) prédéterminée, la cavité d'amplification (21) étant agencée pour ajouter de façon cohérente les impulsions de lumière laser (3) à au moins une impulsion de cavité (1.1, 1.2, ...) en superposant linéairement les impulsions de lumière laser,
**caractérisé en ce que**
- les miroirs de cavité (21.1, 21.2, ...) de la cavité d'amplification sont agencés de sorte qu'au moins une impulsion de cavité (1.1, 1.2, ...) circulant dans la cavité d'amplification (21) irradie la totalité des miroirs de cavité (21.1, 21.2, ...) sous incidence oblique avec un angle (α) d'incidence de plus de 45°.

10. Dispositif laser selon la revendication 9, dans lequel
- les miroirs de cavité (21.1, 21.2, ...) de la cavité d'amplification sont agencés de sorte qu'au moins une impulsion de cavité (1.1, 1.2, ...) circulant dans la cavité d'amplification (21) irradie la totalité des miroirs de cavité (21.1, 21.2, ...) sous incidence oblique avec un angle (α) d'incidence d'au moins 60°.

11. Dispositif laser selon la revendication 9 ou 10, comprenant
- un dispositif de polarisation (14) agencé sur un côté dédié au couplage d'entrée de la cavité d'amplification (21) et fournissant au moins une impulsion de cavité (1.1, 1.2, ...) circulant dans la cavité d'amplification (21) avec polarisation s.

12. Dispositif laser selon la revendication 11, dans lequel
- le dispositif de polarisation (14) comprend une lame à retard λ/2.

13. Dispositif laser selon l'une des revendications 9 à 12, dans lequel
- la cavité d'amplification (21) comprend au moins cinq miroirs de cavité (21.1, 21 2, ...) agencés en tant que résonateur annulaire non croisé.

14. Dispositif laser selon l'une des revendications 9 à 13, dans lequel
- le dispositif à source laser (10) et la cavité d'amplification (21) sont réglés de sorte que la longueur de cavité soit L = N * (c/fᵣₑₚ), c étant la vitesse de la lumière, dans lequel la cavité d'amplification (21) est capable d'ajouter de façon cohérente les impulsions de lumière laser (3) à une pluralité de N impulsions de cavité (1.1, 1.2, ...), avec N ≥ 2, circulant dans la cavité d'amplification (21).

15. Dispositif laser selon la revendication 14, dans lequel le dispositif à source laser (10) comprend
- au moins un premier module de contrôle de fréquence de répétition (12) adapté pour régler dynamiquement une fréquence de répétition du dispositif à source laser (10), et
- un multiplicateur de cadence de répétition (13) adapté pour soumettre les impulsions de lumière laser primaires (2) fournies par le dispositif à source laser (10) à une multiplication passive de fréquence de répétition.
